# EUROPEAN PATENT APPLICATION

(11) **EP 1 666 792 A1**
(43) Date of publication of application: **07.06.2006**
(21) Application number: 05077783.8
(22) Date of filing: 06.12.2005
(51) Int. Cl.: F22B 37/00, B25J 5/00, B25J 18/02

(54) **Manipulator**

(30) Priority: 06.12.2004 NL 1027658
(71) Applicant: Vermaat, Huibrecht Pieter, 3235 XK Rockanje (NL)
(72) Inventor: Vermaat, Huibrecht Pieter, 3235 XK Rockanje (NL)
(74) Representative: Ferguson, Alexander

(57) **Abstract**

Manipulator (1) for tools for carrying out operations in the chambers of a heat exchanger (30), particularly of a heat exchanger for nuclear plants, wherein the manipulator (1) comprises a foot (2,3), as well as an arm (5) mounted on the foot (2,3), which arm (5) at the end is provided with a support part (10) for a tool, wherein the foot (2,3) is provided with means (13) for temporary attachment of the foot to a wall (34), wherein the arm (5) comprises at least two members that are movable with respect to each other in arm direction between a retracted position and one or more extended positions.

## Description

The invention relates to a manipulator for supporting tools for carrying out operations in the chambers of a heat exchanger, particularly of a heat exchanger for nuclear plants.

Such manipulators are known.

US patent 5.017.329 shows a manipulator, which after having been inserted into the chamber via a manhole, has been suspended from the pipe plate by means of span fingers inserted into the openings of the pipes of the pipe plate that bounds the chamber. The manipulator is provided with a carriage to which a jointed arm is mounted. At the end the arm is provided with a support for tools.

In US patent 5.467.813 a manipulator is shown, which with a base plate can be attached by means of suction cups to a partition dividing the chambers. A carriage is movable up and down on the base plate. A parallelogram arm is mounted on the carriage, which arm at the end is provided with a support on which a further arm is slidably mounted. The tool is mounted at an end of said further arm.

Both known manipulators are complex as regards structure and failure prone as a result. They are furthermore bulky, which renders insertion into and removal from the chambers difficult.

It is an object of the invention to provide a manipulator of the type mentioned in the preamble, which is compact.

It is an object of the invention to provide a manipulator of the type mentioned in the preamble that is not so failure prone.

It is an object of the invention to provide a method for placing and using a manipulator in a heat exchanger as mentioned above, with which the operations can easily be carried out.

From one aspect the invention provides a manipulator for tools for carrying out operations in the chambers of a heat exchanger, particularly of a heat exchanger for nuclear plants, wherein the manipulator comprises a foot, as well as an arm mounted on the foot, which arm at the end is provided with a support part for a tool, wherein the foot is provided with means for temporary attachment of the foot to a wall, wherein the arm comprises at least two members that are movable with respect to each other in arm direction between a retracted position and one or more extended positions.

Because both arm members are telescopic, the arm will take up little space during insertion, removal and storage. Due to the extendability a sufficient range is guaranteed, which renders placement on the bottom of the chamber possible. During the operations large surfaces of the pipe plate will then remain free and easily accessible at all times. The manhole is not blocked.

Preferably the two arm members form a telescopic connection, due to which the arm's occupation of space can remain small in transverse direction as well.

The area to be covered can be increased if the arm is rotatably connected to the foot, particularly in a hinging manner, preferably is rotatable about an axis of rotation that is oriented parallel to the foot.

The range and the manipulatability are increased if the foot comprises two members, wherein the first member is provided with the attachment means and the arm is mounted on the second member, wherein the second member is movably attached to the first member. The second member is then preferably rotatable with respect to the first member about an axis that is oriented transverse to the foot, preferably over an angle of at least 360 degrees. "Transverse to the foot" may be considered to mean transverse to a main attachment surface formed or defined by the attachment means on the foot.

Placing and setting the manipulator is enhanced if the second member is movable, preferably tiltable, with respect to the first member about at least one axis that is oriented parallel to the foot, particularly said main attachment surface, wherein the angle of tilting is preferably approximately 20 degrees. In this way the foot can be aligned to the actual orientation of the bottom.

For tilting the first member and the second member of the foot may have convex/concave-shaped surfaces that fit onto each other in order to form a spherical bearing/ball hinge for the movement/tilting of the second member with respect to the first member.

In an advantageous embodiment the attachment means comprise suction cups, as a result of which a reliable placing is possible on curved surfaces as well.

Preferably the operative surface of the attachment means is adjustable, so that if necessary a larger attachment surface can be realised in case of heavier tools.

It may in that case be advantageous if a plurality of attachment means is present, wherein a number of attachment means is extendable in order to increase the operative surface, optionally at an angle to said main attachment surface. In the latter case several surfaces are engaged that are at angle to each other, such as the bottom and the partition of the chambers. In this way a highly stable attachment is provided.

Preferably the shape and/or size of the engagement surface of the attachment means are adjustable.

In a further development the range is further increased because the support part for the tool comprises two members, wherein the first member is attached to the arm and the second member is movably attached to the first member. The second member is then preferably rotatable with respect to the first member, particularly about an axis having a directional component that is parallel to the arm. The axis may be entirely parallel to the arm. The angle of rotation is preferably at least 360 degrees.

At least the second member can be tiltable with respect to the arm about an axis transverse to the arm, which axis preferably is parallel to said main attachment surface. Preferably the second member is tiltable with respect to the first member, preferably over an angle of approximately 20 degrees.

From a further aspect the invention provides a manipulator for tools for carrying out operations in the chambers of a heat exchanger, particularly of a heat exchanger for nuclear plants, wherein the manipulator comprises a foot, as well as an arm mounted on the foot, which arm at the end is provided with a support part for a tool, wherein the foot is provided with means for temporary and direct attachment of the foot to a wall, which attachment means comprise suction cups.

Preferably a plurality of attachment means is present, wherein a number of attachment means is extendable in order to increase the operative surface, optionally at an angle.

From a further aspect the invention provides a method for carrying out operations in a chamber of a heat exchanger, wherein the manipulator according to the invention is inserted into the chamber via a manhole and is attached to at least the bottom of the chamber, which bottom is situated opposite the pipe plate adjacent to the chamber. In this way the operations and movements of the tools can take place most efficiently with minimal impediments.

In a simple and time-saving embodiment the foot of the manipulator is attached to the bottom by means of suction cups. Also in case of concave bottoms, which occur most often, a stable arrangement can easily be realised.

The invention will be elucidated on the basis of an exemplary embodiment shown in the attached figures, in which:
Figure 1 shows a schematic cross-section of a lowermost part of a heat exchanger for for instance a nuclear reactor, wherein a manipulator according to an exemplary embodiment of the invention is positioned in the lowermost part of the heat exchanger;
Figure 2 shows a cross-section comparable to the one of figure 1, however in this case taken according to a vertical plane perpendicular to the plane of figure 1; and
Figure 3 shows an exemplary embodiment of a manipulator according to the invention.

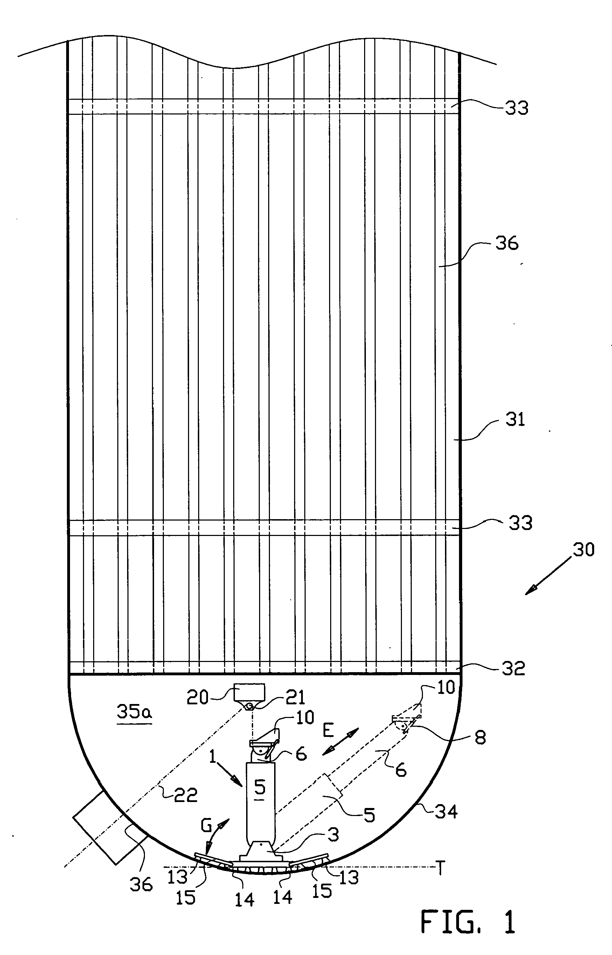

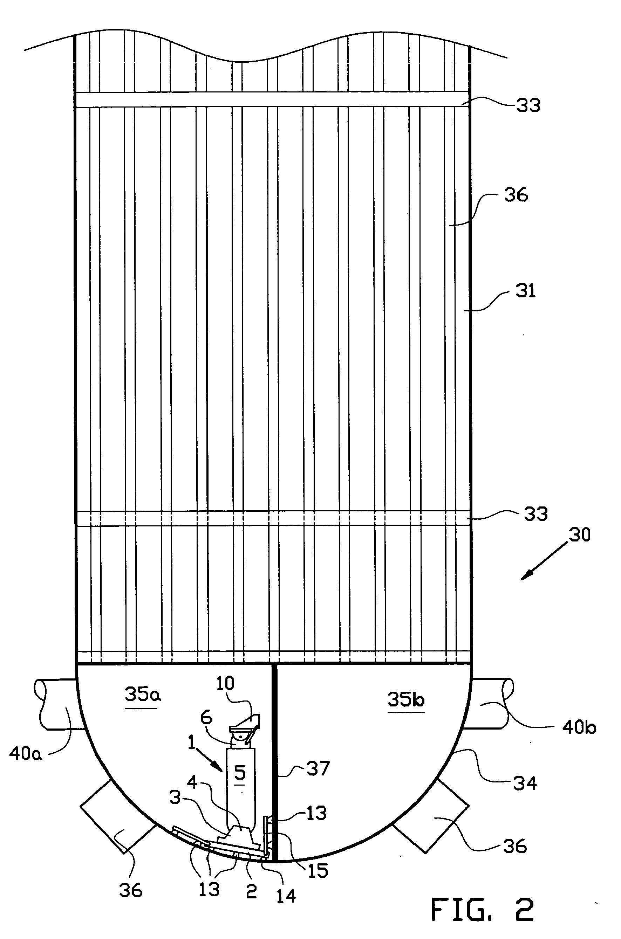

The heat exchanger 30 shown in figure 1 comprises a cylindrical housing 31, in which a number of vertical pipes 36 are positioned. The pipes 36 are attached in pipe plates 33 and at the lower end in pipe plate 32. Below the pipe plate 32 two chambers 35a, 35b have been formed, in which (see figure 2) via connection pipe stub 40a fluid to be cooled can be supplied and via connection pipe stub 40b cooled fluid can be discharged, respectively, after it has flowed upward from the chamber 35a through the pipes 36 and downward through the pipes 36, to the chamber 35b.

Both chambers 35a, b are accessible for inspection and maintenance via manholes 36.

The chambers 35a, b are separated from each other by partition 37 and in this example limited sideward and downward by a semi-spherical bottom wall 34.

Figure 1 schematically shows that via manhole 36 a manipulator according to the invention has been inserted into the chamber 35a, wile using a hoisting cable 22, that runs about hoisting sheers 20 with sheave 21, which for instance by means of suction cups is temporarily attached to the partition 37.

The manipulator 1 comprises a first flat foot plate 2 and an upper foot 3, which upper foot 3 is mounted on the foot plate 2 so as to be rotatable about a centre line Y perpendicular to the foot plate 2 over 360 degrees (directions C). At the lower side the foot plate 2 is provided with a number of suction cups 13, with which the foot plate and thus the manipulator 1 can be secured to the inner surface of the bottom 34 (direction C). In unloaded condition the suction cups define a main attachment surface that is parallel to the foot plate.

The upper foot 3 is furthermore tiltable in the direction D with respect to the foot plate 2 about any horizontal axis, at for instance up to an angle of 20 degrees to the foot plate 2. The rotatability about the Y-axis and in the directions D can be realised by means of a ball hinge, wherein for instance a lower surface of the upper foot 3 is concave and an upper surface of the foot plate fitting thereto is convex.

At the location of hinge 4, an arm 5 is connected to the upper foot 3 so as to hinge about a horizontal centre line X, in order to be rotatable in the directions A in a vertical plane perpendicular to the foot 2.

In this example the arm 5 is two-part, having a sleeve 5a and a sleeve 6 accommodated therein. The sleeve 6 is extendable and retractable into the sleeve 5a in the direction E.

At the location of a hinge 7 a support part 9 is attached to the end of the sleeve 6, which support part 9 is able to hinge in the directions B about the hinge 7. For controlling said motion an extension means 8, for instance a spindle or hydraulic cylinder, has been placed next to the hinge 7, which extension means on the one hand engages onto the end of the arm 6 and on the other hand engages onto the support part 9.

An upper support part 10 has been placed on the support part 9, which with respect to the support part 9 is rotatable over 360 degrees in the directions F, about a centre line that is perpendicular to the meeting plane between support part 9 and upper support part 10.

In the upper surface 11, the upper support part 10 is provided with at least one dovetail-shaped groove 12, in which a matching dovetail-rib provided on a tool (not shown) can be disposed. Several of such grooves may be present, for instance two grooves that are perpendicular to each other. By means of said tool the manipulator carries out the desired maintenance in the chamber 35a, particularly at the lower side of the pipe plate 32 and the entrances of the pipes 36.

With the tool placed on the manipulator 1, in principle any location at the lower side of the pipe plate 32 can be reached by suitable selection of the length of the telescopic arm 5. In this case it is advantageous that the attachment of the manipulator 1, in this example by means of the suction cups 13, at the bottom 34 situated opposite the pipe plate 32, increases the freedom of manipulation.

It is advantageous here that the upper support part 10 can be rotated over 360 degrees to the support part 9, the support part 9 can be tilted in the direction B and the arm can be rotated in the direction A, as well as the upper foot member 3 can be rotated over 360 degrees in the direction C. Due to the tiltability of the upper foot member 3 in the direction D with respect to the foot plate 2, in the situation shown in figure 2, in which the foot plate 2 has to be placed at a section that inclines with respect to the main axis of the heat exchanger 30, the upper foot 3 and thus the arm 5 can be held in a vertical initial position.

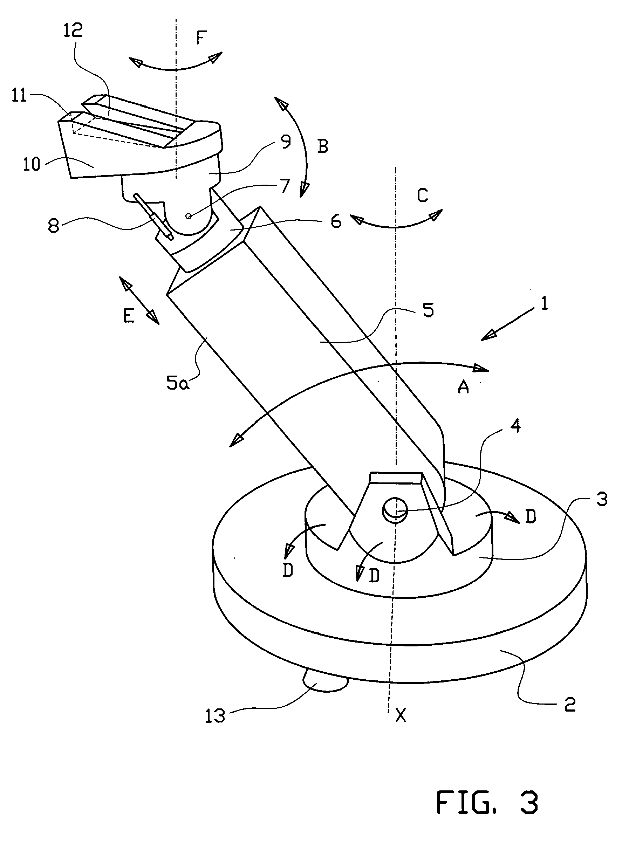

Also shown in the figures 1 and 2, but not in figure 3, is the possibility to provide extension feet 1 5 on the foot plate 2, which extension feet can be connected to the foot plate 2 by means of hinges 14 and themselves are also provided with suction cups 13. As can be seen in figure 1 said extension feet can be used for increasing the engagement surface with the bottom 34, or, as shown in figure 2, for engaging a vertical support surface, such as the partition 37.

The rod 6 is snugly accommodated in the sleeve 5a, so that movement in the direction E cannot deteriorate as a result of deposited dirt.

During the operations the manipulator, once placed in the chamber 35a for the operations at the pipe plate 35 at that location need no longer be moved. After the pipe plate 32 in chamber 35a has been treated, the manipulator 1 can be removed again from the chamber 35a via the manhole 36 via the hoisting sheers 20 and after placing the hoisting sheers 20 in chamber 35b, the manipulator 1 can be moved into said chamber via manhole 36 and placed and used there.

For carrying out the above-mentioned movements of the various components, drives, such as a spindle drive and/or cylinder drive and/or gear wheel drive, that are not further shown, are provided in the manipulator 1. They can be controlled by means of a control unit, that may or may not be programmed or manually operated.

The manipulator according to the invention is compact and has a simple structure. As a result it is able to function reliably and failure-proof. The manipulator can be manufactured of lightweight material, such as synthetic material or aluminium, which increases the manageability.

## Claims

1. Manipulator for tools for carrying out operations in the chambers of a heat exchanger, particularly of a heat exchanger for nuclear plants, wherein the manipulator comprises a foot, as well as an arm mounted on the foot, which arm at the end is provided with a support part for a tool, wherein the foot is provided with means, such as suction cups, for temporary attachment of the foot to a wall, wherein the arm comprises at least two members that are movable with respect to each other in arm direction between a retracted position and one or more extended positions.

2. Manipulator according to claim 1, wherein the two arm members form a telescopic connection.

3. Manipulator according to claim 1 or 2, wherein the arm is rotatably connected to the foot, particularly in a hinging manner.

4. Manipulator according to claim 3, wherein the foot with attachment means defines a main attachment surface and wherein the arm is rotatable about an axis of rotation that is oriented parallel to the attachment surface.

5. Manipulator according to any one of the preceding claims, wherein the foot comprises two members, wherein the first member is provided with the attachment means and the arm is mounted on the second member, wherein the second member is movably attached to the first member, wherein the second member preferably is rotatable with respect to the first member about an axis that is oriented transverse to the foot, particularly transverse to the said main attachment surface, the angle of rotation preferably being at least 360 degrees.

6. Manipulator according to claim 5, wherein the second member is movable, preferably tiltable, with respect to the first member about at least one axis that is oriented parallel to the foot, particularly said main attachment surface, wherein the angle of tilting preferably is approximately 20 degrees.

7. Manipulator according to claim 6, wherein first member and the second member of the foot have convex/concave-shaped surfaces that fit onto each other in order to form a spherical bearing for the movement/tilting of the second member with respect to the first member.

8. Manipulator according to any one of the preceding claims, wherein the operative surface of the attachment means is adjustable, wherein preferably a plurality of attachment means is present, wherein a number of attachment means is extendable in order to increase the operative surface, optionally at an angle to the main attachment surface.

9. Manipulator according to any one of the preceding claims, wherein the shape and/or size of the engagement surface of the attachment means are adjustable.

10. Manipulator according to any one of the preceding claims, wherein the support part for the tool comprises two members, wherein the first member is attached to the arm and the second member is movably attached to the first member, wherein the second member preferably is rotatable, preferably over at least 360 degrees, with respect to the first member, particularly about an axis having a directional component that is parallel to the arm, wherein the axis preferably is entirely parallel to the arm.

11. Manipulator according to claim 10, wherein at least the second member is tiltable with respect to the arm about an axis transverse to the arm, which preferably is parallel to said main attachment surface of the foot, wherein the second member preferably is tiltable with respect to the first member, preferably at an angle of approximately 20 degrees.

12. Manipulator according to any one of the preceding claims, wherein the dimensions are adapted so as to enable passage through a manhole in the heat exchanger.

13. Manipulator for tools for carrying out operations in the chambers of a heat exchanger, particularly of a heat exchanger for nuclear plants, wherein the manipulator comprises a foot, as well as an arm mounted on the foot, which arm at the end is provided with a support part for a tool, wherein the foot is provided with means for temporary and direct attachment of the foot to a wall, which attachment means comprise suction cups.

14. Manipulator according to claim 13, wherein a plurality of attachment means is present, wherein a number of attachment means is extendable in order to increase the operative surface, optionally at an angle.

15. Method for carrying out operations in a chamber of a heat exchanger, wherein the manipulator according to any one of the preceding claims is inserted into the chamber via a manhole and is attached to at least the bottom of the chamber, which bottom is situated opposite the pipe plate adjacent to the chamber.

16. Method according to claim 15, wherein the foot of the manipulator is attached to the bottom by means of suction cups.

17. Method according to claim 15 or 16, wherein the bottom of the chamber is concave.
